# EUROPEAN PATENT SPECIFICATION

(11) **EP 3 468 114 B1**
(45) Date of publication and mention of the grant of the patent: **02.03.2022**
(21) Application number: 16904176.1
(22) Date of filing: 12.09.2016
(51) Int. Cl.: H04L 12/723

(54) **METHOD FOR TRANSMITTING ETHERNET FRAMES OVER SOFTWARE DEFINED NETWORKS (SDN)**
VERFAHREN ZUR ÜBERTRAGUNG VON ETHERNET-RAHMEN ÜBER SOFTWAREDEFINIERTE NETZWERKE (SDN)
PROCÉDÉ DE TRANSMISSION DE TRAMES ETHERNET VIA DES RÉSEAUX DÉFINIS PAR LOGICIEL (SDN)

(30) Priority: 31.05.2016 RU 2015139531
(43) Date of publication of application: 10.04.2019
(73) Proprietor: Obschestvo S Ogranichennoi Otvetstvennostyu «Programmiruemye SETI», Moscow, 117342 (RU)
(72) Inventor: RUMYANKOV, Alexandr Sergeevich, Nizhny Novgorod (RU); KAMINSKY, Maksim Valerievich, Moscow 119602 (RU); ROMANOV, Sergey Ilich, Moscow 117624 (RU)
(74) Representative: Chimini, Francesco
(86) International application number: PCT/RU2016/050034
(87) International publication number: WO 2017/209645

(56) References cited:
- RU-C1- 2 584 471
- US-A1- 2004 258 073
- US-A1- 2007 286 204
- US-A1- 2007 286 204
- US-A1- 2015 043 589
- US-A1- 2015 043 589
- US-B1- 8 923 301

## Description

### TECHNOLOGY FIELD

This technical solution relates to the data transmission technology in packet-switched Software Defined Networks (SDN), consisting of switches with Ethernet ports and controlled by software controllers.

### PRIOR ART

Currently, in SDN networks, packet switching is performed mainly based on MAC layer address information. Such approach implies that each device must contain a table of switching rules for each MAC address interacting with the network, or forward the packet to a controller for further routing, which increases switching delays and reduces network performance. These requirements act as limiting factors for the network scalability in case of a large number of users.

There is a known method of data flow control in the domain by packet-switched software defined networks (SDN) OpenFlow switches (see US2015043589 (A1) - 12.02.2015). This method implies that at least one frame is received at the input port of the SDN input switch, the output network switch and the end output port are defined, the most preferable path to the output port is determined, the frame is modified by inserting a specially designed address field, containing information on the most preferable calculated path to the output port, into its header. Disadvantages of this method include the mandatory insertion of a specially designed address field into the frame header, as well as the requirement to support non-standard field operations by the switch and controller's software. Another example of frame transport using MPLS transport tags can be found in US2004258073.

### SUMMARY OF THE TECHNICAL SOLUTION

The claimed technical solution is designed to eliminate the above-mentioned drawbacks.

The aim of this technical solution is to increase network switches' resource efficiency by establishing frame transport path in the network with MPLS transport tags set by the network controller as well as to reduce software functional requirements for OpenFlow switches and controllers by supporting standard frame fields processing.

The frame formation method includes operations which need to:
receive at least one frame at the input port of the software defined network input switch;
define the output network switch and the end output port;
calculate the most preferable path to the output port and code it by at least one MPLS transport tag;
modify the above frame, by:
   - saving the field of the embedded protocol identifier (EPI);
   - replacing the EPI field with a predefined constant;
   - adding an MPLS Ethertype tag containing the saved EPI;
   - adding at least one MPLS transport tag that encodes the most preferable path;
send the modified frame to the next switch according to the most preferable path.

The frame processing method includes operations which need to:
receive a frame at the input port of the switch;
identify the value of the embedded protocol identifier (EPI) field;
if the field value satisfies a preset condition, the first MPLS-tag is read;
if this tag is within the output port range, it is deleted, the next tag describing the saved EPI is read, the frame is converted into the original format and sent to the output port specified in the first MPLS-tag;

Otherwise, the first MPLS (transport) tag is removed from the frame or modified and the modified frame is sent to the next switch according to the most preferable path;

The frame is converted into the original format and the MPLS label Ethertype tag value is recorded into the EPI field value.

### DETAILED DESCRIPTION

**Software defined network** (SDN) is a data communication network, in which the level of network management is separated from data transmission devices and is implemented as software, which is a form of virtualization of computing resources.

**OpenFlow** is a data processing control protocol for data network transmission performed by routers and switches, implementing the technology of Software Defined Networking.

**MAC-address (Media Access Control)** is the unique identifier assigned to each unit of active hardware or some of their interfaces in Ethernet computer networks.

**Port** is a natural number recorded into transport protocol headers of the OSI model (TCP, UDP, SC TP, DCCP). Used to define the process - receiver of the packet within the same host.

**Broadcast/broadcasting** - one sender, multiple recipients -- all devices within the broadcast segment (Example: ARP request).

**Multicast/Multicasting** - one sender, multiple recipients (Example: IPTV).

**IPv4** is the fourth version of the IP protocol described in IETF RFC 791.

**IPv4 multicast** is a multicast communication using IPv4.

**Ethernet** is a family of standards that define wiring and electrical signals at the physical level, frame format and medium access control protocols at the OSI data link layer.

**Frame** is the protocol data unit at the OSI data link layer transmitted over the communication link.

**Switch** is a device designed for connecting several nodes of a computer network within one or more network segments at the data link (second) layer of the OSI model.

**MPLS** (Multiprotocol Label Switching) is a mechanism in a high-performance telecommunications network that transfers data from one node to another one using tags.

**MAC-learning** is the process of filling in MAC-address table of a switch, based on studying the MAC-address of any sender sending a fame to the switch. If there is no MAC-address of the sender in the table, it is recorded into it with reference to the port entered by the frame.

MPLS is a scalable mechanism independent of any data transmission protocols. In networks based on MPLS data packets are coded with tags. The decision of transferring the data packet further to another node is taken only based on the value of the assigned tag without studying the data packet itself. This allows to create an end-to-end virtual channel independent of the medium and using any data transmission protocol.

A Software Defined Network for the described method must consist of at least two OpenFlow switches and at least one SDN controller. OpenFlow switches must be in the mode of exclusive control by SDN controller (secure mode), i.e. they must not commute frames bypassing the rules set by the controller.

When the network is initialized, the SDN controller determines the network topology and the shortest paths between all possible pairs of switches using Dijkstra's or Bellman-Ford algorithms, using the assigned channel weights between switches. At least one SDN controller encodes each shortest path with a chain of MPLS transport tags or a stack of MPLS transport tags in each segment of the shortest path and sets the appropriate OpenFlow rules of operations with MPLS transport tags in switches whose ports terminate the above channels. These rules are set as follows:
- at the input switch, the first MPLS transport tag or a stack of MPLS transport tags from the shortest path chain are inserted;
- at the intermediate switches, the MPLS transport tag or the stack of MPLS transport tags are substituted for the next one from the shortest path chain;
- at the output switch, the MPLS transport tag or the stack of MPLS transport tags are removed and the original frame is restored.

A change of the original embedded protocol identifier (EPI) of Ethernet frame may occur at the input switch because of insertion of an MPLS transport tag or a stack of MPLS transport tags. Therefore, the original EPI is saved and recorded into an additional MPLS transport tag - Ethertype Tag, which is inserted into the frame of the first one. In different types of original frames, the EPI is saved in different fields:
- for Ethernet II frames it is saved in EtherType field;
- for IEEE 802.3 LLC/SNAP frames it is saved in PID field of SNAP header;
- for IEEE 802.1Q and IEEE 802.1ad frames it is saved in TPID field of 802.1Q outer header.

The output port of a chain for an incoming frame can be determined by one of the following methods:
1) statically, when configuring the service (for example, point-to-point service);
2) dynamically, where SDN controller recognizes the MAC-address (MAC Address Learning) at external ports and remembers the port through which one of the receiver's MAC-addresses is accessible (Destination MAC address).

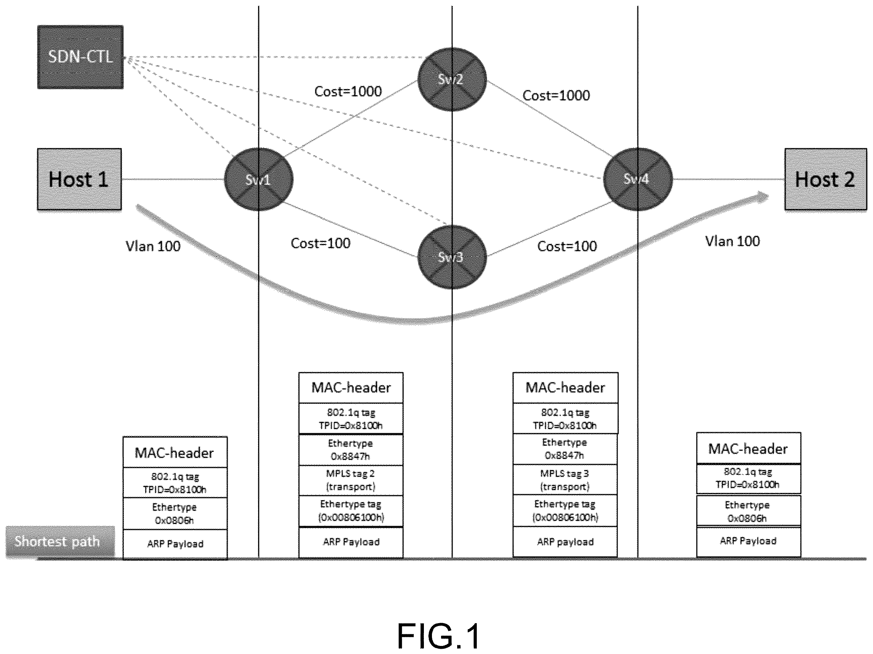

An example of network and the process of frame transfer is shown in Fig. 1 as exemplified by an IEEE 802.1Q frame.

Sw1 switch receives frame IEEE 802.1Q at its external input port, comprising the following fields:
- **MAC-header**, where DestinationMAC=Host 2-MAC, SourceMAC=Host 1-MAC
- **802.1Q tag**, where VID=100, TPID=0x8100h, vlanPCP - does not have any value
- **Ethertype**=0x0806h (EPI of ARP protocol)
- **Payload**=ARP packet

Sw1 switch inserts two MPLS transport tags into the frame:
- **Ethertype tag** with fields Label=0x00806h (copied by Ethertype to low-order bits), TC=vlanPCP (copied from 802.1Q header), BoS=1, TTL=0
- **MPLS transport tag 2** with fields Label=2, TC=vlanPCP (copied from 802.1Q header), BoS=0, TTL=255

Simultaneously, the Ethertype field is set to 0x8847h (EPI of MPLS protocol).

Then the frame is forwarded along the shortest path chain to the channel port to Sw3 Switch.

Sw3 switch analyzes the top MPLS transport tag 2, modifies it by installing MPLS transport tag 3 (Label=3) and sends it to the next Sw4 switch in the shortest path chain.

Sw4 switch receives the frame, analyzes MPLS transport tag 3, determines that this is the terminate switch and extracts the entire stack of MPLS-tags. Then the lower 4 bytes of Label field from the Ethertype tag are copied into the Ethertype field of the frame and sent to the output port.

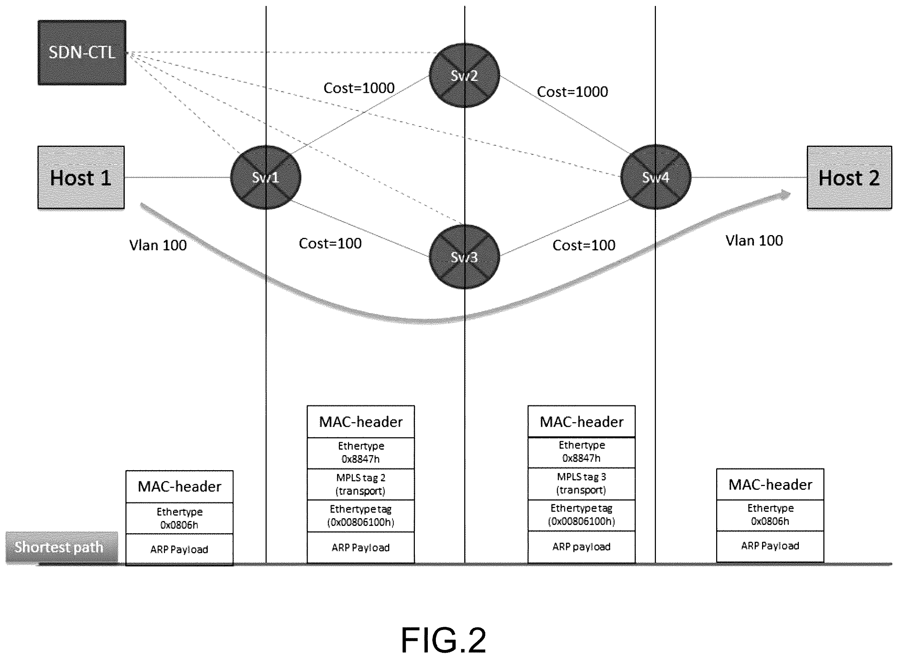

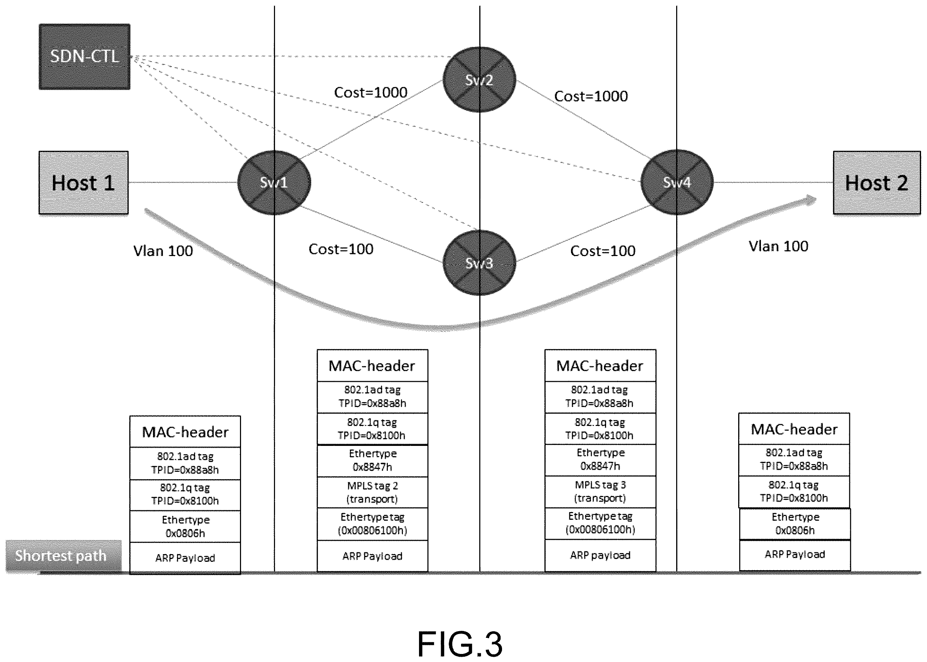

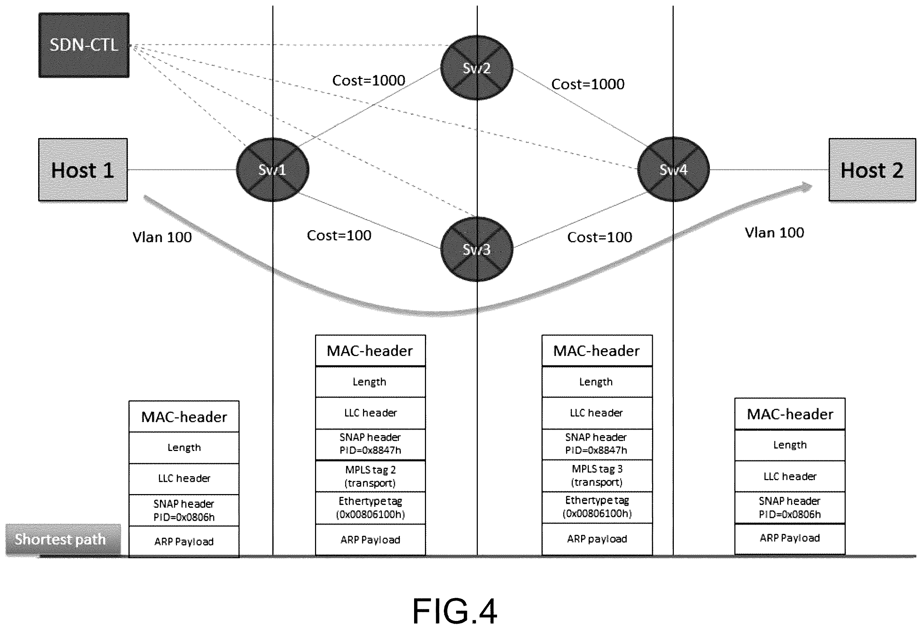

Examples of Ethernet II, IEEE 802.1ad, IEEE 802.3 LLC/SNAP fames transfer process are shown respectively in Fig. 2, 3, 4.

The frame formation method includes the following steps:
At least one frame is received at the input port of the software defined network input switch.

The resulting frame can be Ethernet II, IEEE 802.3 LLC/SNAP, IEEE 802.1Q or IEEE 802.1ad frame.

For at least one received frame, the output network switch and the end output port are determined (based on static configuration or dynamic MAC-learning within the ports of the configured service).

The most preferable path to the output port is calculated using Dijkstra's or Bellman-Ford algorithms and this path is encoded with at least one MPLS-tag.

The received frame is modified by:
- saving the field of the embedded protocol identifier (EPI);
- replacing the EPI field with EPI of MPLS protocol (0x8847h);
- adding MPLS Ethertype tag containing the saved EPI;
- adding at least one MPLS transport tag, encoding the preferred path.

The modified frame is sent to the next switch according to the most preferable path.

The claimed frame formation and processing method is industrially applicable, since it uses well-known and tested methods and components.

Although this technical solution is described by a specific example of its implementation, the description above is non-restrictive, but is presented only to illustrate and better understand the summary of the technical solution, the scope of which is determined by the attached formula.

## Claims

1. A frame formation method includes the following steps:
at least one frame is received at the input port of the software defined network input switch;
for at least one received frame, the output network switch and the end output port are determined;
the most preferable path to the output port is calculated and encoded with at least one MPLS transport tag;
the above-mentioned frame is modified by:
- saving the field of the embedded protocol identifier, EPI;
- replacing the EPI field with a predefined constant;
- adding an MPLS Ethertype tag containing the saved EPI;
- adding at least one MPLS transport tag that encodes the most preferable path;
the modified frame is sent to the next switch according to the most preferable path.

2. A frame processing method includes the following steps:
at least one frame is received at the input port of the software defined network input switch;
the value of the embedded protocol identifier,EPI,
field is identified for at least one
received frame;
if the field value satisfies a preset condition, the first MPLS-tag is read,
- if this tag is within the output port range, it is deleted, the next tag describing the saved EPI is read, and the frame is converted into the original format and sent to the output port specified in the first MPLS transport tag;
- otherwise, the MPLS transport tag is removed from the frame or modified and the modified frame is sent to the next switch according to the most preferable path.

3. The frame processing method according to claim 2, in which the frame is converted into the original format, the value of MPLS label Ethertype tag is inserted into the field of embedded protocol identifier.

## Patentansprüche

1. Frame-Erzeugungsverfahren, welches die folgenden Schritte umfasst:
wenigstens ein Frame wird an dem Eingangsport des softwaredefinierten Netzwerk-Eingangs-Switch empfangen;
für wenigstens einen empfangenen Frame werden der Ausgangs-Netzwerk-Switch und der Endausgangsport bestimmt;
der bevorzugteste Pfad zu dem Ausgangsport wird berechnet und mit wenigstens einem MPLS-Transport-Tag verschlüsselt;
der obengenannte Frame wird modifiziert durch:
- Speichern des Feldes der eingebetteten Protokollkennung, EPI;
- Ersetzen des EPI-Feldes mit einer vordefinierten Konstante;
- Hinzufügen eines MPLS-Ethertype-Tag, welcher die eingebettete EPI enthält;
- Hinzufügen wenigstens eines MPLS-Transport-Tags, welcher den bevorzugtesten Pfad verschlüsselt;
der modifizierte Frame wird gemäß dem bevorzugtesten Pfad an den nächsten Switch gesendet.

2. Frame-Verarbeitungsverfahren, welches die folgenden Schritte umfasst:
wenigstens ein Frame wird an dem Eingangsport des softwaredefinierten Netzwerk-Eingangsswitchs empfangen;
der Wert der eingebetteten Protokollkennung, EPI, wird für wenigstens einen empfangenen Frame identifiziert;
wenn der Wert eine vorbestimmte Bedingung erfüllt, wird der erste MPLS-Tag eingelesen,
- wenn dieser Tag innerhalb des Ausgangsportbereichs liegt, wird dieser gelöscht, der nächste Tag, welcher die gespeicherte EPI beschreibt, eingelesen, und der Frame in das originale Format konvertiert und zu dem Ausgangsport gesendet, welcher in dem ersten MPLS-Transport-Tag festgelegt ist;
- andernfalls wird der MPLS-Transport-Tag aus dem Frame entfernt oder modifiziert und der modifizierte Frame gemäß dem bevorzugtesten Pfad an den nächsten Switch gesendet.

3. Frame-Verarbeitungsverfahren nach Anspruch 2, wobei der Frame in das originale Format konvertiert wird, und der Wert des MPLS-Label-Ethertype-Tags in das Feld der eingebetteten Protokollkennung eingefügt wird.

## Revendications

1. Procédé de formation de trames, comprenant les étapes suivantes :
au moins une trame est reçue au port d'entrée du commutateur d'entrée du réseau défini par logiciel ;
pour au moins une trame reçue, le commutateur de sortie de réseau et le port final de sortie sont déterminés ;
le chemin le plus préféré vers le port de sortie est calculé et codé avec au moins un label de transport MPLS ;
la trame mentionnée ci-avant est modifiée en
- sauvegardant le champ de l'identifiant de protocole incrusté, EPI ;
- remplaçant le champ EPI par une constante prédéfinie ;
- ajoutant un label MPLS ethertype contenant l'EPI sauvegardé ;
- ajoutant au moins un label de transport MPLS qui encode le chemin le plus préféré ;
la trame modifiée est envoyée au commutateur suivant selon le chemin le plus préféré.

2. Procédé de traitement de trames, comprenant les étapes suivantes :
au moins une trame est reçue au port d'entrée du commutateur d'entrée du réseau défini par logiciel ;
la valeur du champ incrusté de l'identifiant de protocole, EPI, est identifiée pour au moins une trame reçue ;
si la valeur du champ remplit une condition prédéterminée, le premier label MPLS est lu,
- si le label est dans la plage du port de sortie, il est effacé, le label suivant décrivant l'EPI sauvegardé est lu et la trame est convertie au format d'origine et envoyé au port de sortie spécifié dans le premier label de transport MPLS ;
- si non, le label de transport MPLS est enlevé de la trame ou modifié et la trame modifiée est envoyée au commutateur suivant selon le chemin le plus préféré.

3. Procédé de traitement de trames selon la revendication 2, dans lequel la trame est converti au format d'origine, la valeur du label ethertype d'étiquette MPLS est insérée dans le champ de l'identifiant de protocole incrusté.
